# EUROPÄISCHE PATENTSCHRIFT

(11) **EP 2 671 308 B1**
(45) Veröffentlichungstag und Bekanntmachung des Hinweises auf die Patenterteilung: **24.10.2018**
(21) Anmeldenummer: 12706450.9
(22) Anmeldetag: 30.01.2012
(51) Int. Cl.: H02K 21/24, H02K 7/08, H02K 7/18, H02K 7/09, F03D 9/25, H02K 7/116, F16C 19/54

(54) **ROTORLAGERUNG FÜR EINE ELEKTRISCHE MASCHINE**
ROTOR BEARING FOR AN ELECTRICAL MACHINE
LOGEMENT DE ROTOR POUR UNE MACHINE ÉLECTRIQUE

(30) Priorität: 04.02.2011 DE 102011011164
(43) Veröffentlichungstag der Anmeldung: 11.12.2013
(73) Patentinhaber: IMO Holding GmbH, 91350 Gremsdorf (DE)
(72) Erfinder: HOFMANN, Georg, 91346 Wiesenttal (DE); SADEL, Stefan, 96155 Buttenheim (DE); DENNERLEIN, Johannes, 97478 Knetzgau (DE); RUSS, Erich, 91350 Gremsdorf (DE)
(74) Vertreter: Schmidt, Steffen J.
(86) Internationale Anmeldenummer: PCT/EP2012/000391
(87) Internationale Veröffentlichungsnummer: WO 2012/104050

(56) Entgegenhaltungen:
- EP-A1- 2 063 114
- EP-A1- 2 063 114
- WO-A1-02/057624
- WO-A1-02/057624
- US-A1- 2010 225 112
- US-A1- 2010 225 112

## Beschreibung

Die Erfindung richtet sich auf eine Rotorlagerung für eine elektrische Maschine, insbesondere auf einen Scheibenläufer-Generator zur Erzeugung elektrischer Energie aus der Rotationsenergie einer drehangetriebenen Kraftanlage, vorzugsweise einer Strömungskraftanlage, insbesondere einer Windkraftanlage, mit wenigstens zwei entlang einer etwa horizontalen Rotationsachse des Scheibenläufers axial gegeneinander versetzten Statorkomponenten sowie mit wenigstens einer dazwischen angeordneten, mittels einer einzigen Wälzlagerung um die Rotationsachse rotierend gelagerten ring- oder scheibenförmigen Rotorkomponente des Scheibenläufers, sowie auf eine solchermaßen ausgerüstete Windkraftanlage.

Rotierende Anlagen- und Maschinenteile werden im Stand der Technik häufig mittels Wälzlagerungen gelagert.

Beispielsweise beschreibt die Offenlegungsshrift DE 10 2004 021 138 A1 eine elektrische Maschine und deren Lagerung, wobei bei dieser Idee das Festlager durch zwei Rillenkugellager realisiert wird. Bei einer derartigen Konstruktion ist die drehbare Welle an zwei verschiedenen Stellen gelagert, ein so genanntes Festlager und ein so genanntes Loslager. Eine solche mehrfache Lagerung ist bei großen rotierenden Massen jedoch vergleichsweise aufwändig, da in solchen Fällen die Wälzlagerungen entsprechend massiv und damit kostenintensiv auszulegen sind.

Insbesondere in einer Windkraftanlage soll die durch die Windkraft angetriebene Welle, welche entlang der Rotor-Hauptachse orientiert ist, derart gelagert werden, dass ein möglichst reibungsarmer Betrieb gewährleistet ist, damit die durch den Windantrieb gewonnene Energie möglichst verlustarm weitergegeben und umgewandelt werden kann.

So widmet sich beispielsweise die Offenlegungsschrift DE 10 2009 004 991 A1 im Rahmen einer Windkraftanlage der Lagerung des Rotors, dessen Rotationsachse etwa in Windrichtung weist. Die vorgeschlagene Lagerung verfügt über wenigstens zwei ringförmige, zueinander konzentrische Elemente zum Anschluss an gegeneinander verdrehbare Anlagenteile der Windkraftanlage, nämlich an deren Rotor oder an die Abtriebswelle eines daran gekoppelten Getriebes einerseits, sowie an dem Chassis des Maschinenhauses andererseits. Bevorzugt treibt die Windkraft über eine Getriebestufe eine Welle an, die abtriebsseitig mit weiteren Komponenten gekoppelt ist.

Auch im Rahmen der bei der Umwandlung von Rotationsenergie in elektrische Energie verwendeten elektrischen Maschinen stellt sich das Problem der Lagerung einer sich drehenden Welle.

So offenbart beispielsweise die DE 10 2007 037 842 A1 eine elektrische Maschine der Gattung eines mittig gelagerten Scheibenläufers, ausgebildet als Scheibenläufer mit einem Stator und einem scheibenförmigen Rotor. Der Stator weist dabei mindestens ein an einer Halterung angeordnetes scheibenförmiges Statorteil auf, das in axialer Richtung von dem Rotor beabstandet ist und über den Luftspalt magnetisch mit dem Rotor zusammenwirkt, wobei der Rotor um seine Rotationsachse verdrehbar an einer Halterung gelagert ist. Zum eingangsseitigen Anschluß eines solchen Generators verfügt dieser über eine Eingangswelle, die jedoch mit der Ausgangswelle eines Getriebes od. dgl. nur durch stumpfes Anflanschen verbunden werden kann. Eine solche Wellenverbindung macht es unmöglich, den Generator und ein Getriebe od. dgl. eng zusammen zu rücken, weil ansonsten die Wellenverbindung nicht zugänglich ist. Da insbesondere bei Windkraftanlagen nur wenig Platz zur Verfügung steht, ist ein solcher Generator bei Windkraftanlagen nicht vorteilhaft einsetzbar.

Ein weiterer Scheibenläufer-Generator für eine Windkraftanlage mit einem vorgeschalteten Planetengetriebe ist in US 2010/0225112 A1 offenbart. WO 02/057624 A1 offenbart einen Generator für eine Windkraftanlage, die ein zweireihiges Schrägwalzenlager aufweist.

Aus den Nachteilen des vorbeschriebenen Standes der Technik resultiert das die Erfindung initiierende Problem, eine platzsparende Anordnung für den Generator einer Windkraftanlage zu schaffen, welche die antriebsseitige Ankopplung an eine Getriebestufe ermöglicht und eine möglichst verlustarme Umwandlung der rotatorischen Energie in elektrische Energie erlaubt.

Die Lösung dieses Probleme gelingt bei einem Scheibenläufer-Generator zur Erzeugung elektrischer Energie aus der Rotationsenergie einer drehangetriebenen Kraftanlage mit den Merkmalen des Anspruchs 1. Bevorzugte Weiterbildungen sind in den abhängigen Ansprüchen offenbart.

Es hat sich gezeigt, dass eine erfindungsgemäße Lagerung durchaus geeignet ist, den rotierenden Scheibenläufer auch trotz erheblicher Magnetkräfte exakt zu führen, also die ggf. auftretenden Kippmomente aufzunehmen und abzuleiten, ohne dass dabei der Scheibenläufer seine Lage bzw. Orientierung im Raum ändert, insbesondere derart, dass die Luftspalte zwischen dem Magnet-Rotor und den damit verketteten Statorspulen sich in nennenswertem Umfang ändert.

Zur Lagerung des Rotors einer elektrischen Maschine an zwei gegeneinander versetzten Lagerorten, zwischen denen sich der zu lagernde Rotor befindet, kann an jedem dieser zwei Lagerorte sich je ein Wälzlager befinden, also um eine Länge L in Längsrichtung der Rotordrehachse voneinander beabstandet. Solchenfalls ist eines dieser Lager, bezogen auf eine Windkraftanlage, getriebeseitig angebracht, also der Nabe des Windrades zugewandt, während das andere dieser Lager solchenfalls turmseitig angebracht wäre; zwischen beiden Lagern rotiert das Rotorelement der elektrischen Maschine, sobald die Welle angetrieben wird. Die Lagerung der elektrischen Maschine ist dabei nicht zwangsweise gleich der Lagerung der antreibenden Welle. Ein solches zweiteiliges Lager ist dabei so zu dimensionieren, dass die Lager statisch nicht durch die beim Betrieb der Energiekraftmaschine entstehende Magnetkraft zerstört wird.

Dies gilt auch für eine Anordnung mit nur einer Lagerstelle: Auch dort ist die Lagerung für den Rotor des Generators derart auszulegen, dass die gesamte Generatorbaugruppe die Belastungen aus der magnetischen Wirkung des Generatorbetriebs aufnehmen kann, ohne dass die Lagerung für den Rotor infolge der resultierenden Magnetkräfte in nennenswertem Rahmen verformt wird. Andererseits läßt sich die erfindungsgemäße Generatorbaugruppe möglichst platzsparend aufbauen und eine möglichst kompakte Einheit darstellen. Die Zahl der dazu erforderlichen Komponenten kann reduziert werden; außerdem können die Komponenten möglichst leicht für Korrekturen, Reparaturen, Nachrüstmontagen zugänglich sein. Die Lagerung des Scheibenläufers kann für Servicemaßnahmen leicht zugänglich gestaltet werden. Die Komponenten, insbesondere der Scheibenläufer, sollen möglichst einfach und zeitsparend montierbar sein, sodass die Montage- und Servicezeiten, welche der Monteur oder Servicetechniker in der Windkraftanlage verbringt, möglichst kurz sind.

Die Erfindung läßt sich dahingehend weiterbilden, dass eine ring- oder scheibenförmige Rotorkomponente des Generators nur eine einzige Lagerung, insbesondere Wälzlagerung, aufweist. Die elektrische Maschine verfügt als Scheibenläufer über eine oder mehrere ring- oder scheibenförmige Rotorkomponente(n), insbesondere eine oder mehrere Rotorscheibe(n), welche sich während des Betriebes drehend zwischen (jeweils) ersten und zweiten Statorkomponenten bewegt (-en); diese ist (sind jeweils) mittels einer einzigen Lagerung, insbesondere Wälzlagerung, um die Rotor-Hauptachse drehbar gelagert.

Um das Gewicht der gelagerten und rotierenden Elektromaschinenscheibe(n) und das (jeweils) daraus resultierende Kippmoment aufzunehmen, genügt bereits ein einziges Lager, insbesondere ein zweireihiges Schrägkugellager.

Wenn nur eine rotierende Elektromaschinenscheibe verwendet wird, dann ist demnach nur ein einziges Wälzlager, insbesondere ein zweireihiges Schrägkugellager, notwendig. Durch die dann resultierende Platzersparnis aus dem Wegfallen des zweiten Lagers, ist die Gesamtbaugruppe piatzoptimiert und kompakter als der bisherige Stand der Technik. Durch den Wegfall der zweiten Lagerstelle werden auch weniger Bauteile benötigt. Dies führt auch zu Kosteneinsparungen.

Durch Verzicht auf eine Lagerstelle pro Rotorscheibe kann einerseits Material und andererseits Platz gespart werden, und die Anzahl der Drehverbindungen verringert sich. Dadurch sinkt der Montageaufwand, und die Zugänglichkeit zum getriebeseitigen Lager ist erleichtert, was gerade bei Windkraftanlagen besonders wichtig ist, weil man dort im Betrieb nur von der Turmseite her auf die Komponenten der Generatorbaugruppe zugreifen kann.

Ferner ist es von Vorteil, dass nur wenige Stellen existieren, welche gegen austretende Medien wie beispielsweise Öl, Schmierstoff oder Fette, abgedichtet werden müssen. Daraus resultiert der weitere Vorteil, dass in einer erfindungsgemäßen Anlage weniger Dichtungsstellen vorhanden sind als beim Stand der Technik.

Bekanntermaßen bilden Dichtungsstellen in rotierenden und langlebigen Anlagen häufig Schwachstellen solcher Anlagen, da bei undichten Dichtungselementen von Drehverbindungen und/oder Lagern Leckagen auftreten können. Leckagen in Drehverbindungen führen beispielsweise zu verfrühtem Verlust von Schmiermittel, somit zu geringerer als der notwendigen Schmierung und damit häufig zur Lagerbeschädigung. Die Standzeit einer Anlage sinkt bei Lagerbeschädigung im Allgemeinen. Wenn insgesamt weniger Dichtungsstellen vorhanden sind, bedeutet dies gleichzeitig auch weniger Stellen, die fehler- oder ausfallanfällig sind.

Durch die erfindungsgemäße Anordnung, insbesondere auch durch die Gestaltung der Lager und durch die Führung der die Rotationsenergie transportierenden Welle durch diese Lager hindurch sind viele Elemente der Anordnung von der Turmseite her leicht zugänglich. Insbesondere ist es während routinemäßiger Aufenthalte des Servicetechinikers in der Anlage vereinfacht möglich, die vorhandenen turmseitigen Dichtungsstellen auszutauschen, ohne dass dazu ein Lager ausgebaut werden muss. Ein wesentlicher weiterer Vorteil bei Verwendung von nur einem einzigen Lager zur Lagerung der rotierenden Elektromaschinenscheibe ist es, dass man nicht mehrere verschiedenen Lager aufeinander abstimmen muss. Dies spart Zeit bei Service und Montage.

In einer bevorzugten Ausführungsform der Erfindung rotiert nur eine Rotorscheibe zwischen zwei Statorkomponenten. Es ist jedoch ohne Weiteres denkbar, dass der Generator mehrere solcher Baugruppen aus je einem Statorkomponenten-Paar und einem dazwischen angeordneten Rotor umfasst, bspw. um die Nennleistung des Generators zu erhöhen. Allerdings würde dann die Gesamtbaugruppe in Längsrichtung der Rotationsachse größer aufbauen. Bevorzugt wäre dann jeweils eine ring- oder scheibenförmige Rotorkomponente durch je ein eigenes Wälzlager um die Rotor-Hauptachse drehbar gelagert. In einer weiter bevorzugten Ausgestaltung wäre jenes Wälzlager jeweils ein zweireihiges Schrägkugellager.

Die Erfindung sieht weiterhin vor, dass ein Wälzlager, welches mindestens eine ring- oder scheibenförmige Rotorkomponente um die Rotor-Hauptachse drehbar lagert, so ausgeführt ist, dass es an einer Trägerstruktur des Generators festgelegt ist. In der bevorzugten Ausführungsform ist es daher insbesondere direkt mit dem Generatorgehäuse verschraubt oder mit einem anderen fixen Element des Generatorträgers fest verbunden. Dieses erste Wälzlager ist dabei stets das einzige Lager, welches jeweils eine rotierende Rotorkomponente des elektrischen Generators in der Windkraftanlage lagert.

Weitere Vorteile ergeben sich, wenn der Innenringdurchmesser dieses Wälzlagers um einen Abstand B größer ist als der Außendurchmesser einer das Getriebe und/oder den Generator durchsetzenden, innersten Hohlwelle oder Hülse. Dadurch wird erreicht, dass zum Einen die Generatorscheibe eher ringförmig als scheibenförmig ausgestaltet sein kann, wodurch Material eingespart werden kann, und auf der anderen Seite wird erreicht, dass dieses erste Wälzlager möglichst in der Nähe der Statorkomponenten, zwischen denen die Rotorscheibe sich drehend bewegt, gelagert werden kann. Dies wiederum bedeutet beispielsweise weniger Kippmoment aus der gelagerten Rotorscheibe, und ebenso bietet sich dort aufgrund des größeren Durchmessers des ersten Wälzlagers mehr Lagerfläche, also eine stabilere oder gleichförmige Lagerung der gelagerten Scheibe an.

In einer bevorzugten Ausführungsform der Erfindung beträgt der Abstand B und/oder der Abstand C etwa zwischen 20 und 30 cm. Diese Abstände B, C zu der innersten Hohlwelle bzw. zu der Abtriebswelle des Getriebes können aber andererseits auch kleiner gewählt werden, bspw. etwa nur 1 cm oder größer, oder bis zu 5 cm größer als jener, oder um wenigstens 30 cm oder mindestens 50 cm größer als jener. Wenn die Lagerung noch stabiler ausgeführt werden soll, oder wenn sehr große Rotorscheiben zu lagern sind, kann sich auch ein Abstand B und/oder C von mehr als 50 cm und weitaus mehr als sinnvoll erweisen, bspw. von 100 cm oder mehr.

Wenigstens eine ring- oder scheibenförmige Rotorkomponente des Generators ist mit einem oder mehreren, direkt oder indirekt mit der Welle verbundenen und um die Hauptachse drehbar angeordneten Elementen gekoppelt oder verbunden. Diese Verbindung kann beispielsweise durch massive Schraubverbindungen erfolgen; denkbar wäre jedoch auch jede andere gängige Art massiver, verdrehfester Formschlussverbindungen oder Kraftschlussverbindungen.

Ausgehend der weiter oben spezifizierten Abstände B, C hat es sich als besonders vorteilhaft erwiesen, wenn die Kopplungseinrichtung zwischen der Getriebeausgangs- und/oder der Generatoreingangswelle einerseits und einem ring- oder scheibenförmigen Rotorelement wenigstens eine Kupplungsscheibe aufweist und/oder wenigstens einen Wellenring. Es ist dann angedacht, dass die Rotation der Welle auf beispielsweise einen Wellenring übertragen wird, der mit der Getriebeabtriebswelle formschlüssig verbunden ist und zusammen mit jener um die Rotor-Hauptachse rotiert. Dieser Wellenring ist aber andererseits ebenfalls mit der angekoppelten Kupplungsscheibe formschlüssig verbunden. Beide Elemente, Wellenring und Kupplungsscheibe, rotieren im Betrieb um die Rotor-Hauptachse und sind mit wenigstens einem oder mehreren Verbindungselement(en) drehfest untereinander gekoppelt.

Gemäß einer bevorzugten Weiterbildung der Erfindung erfolgt die Ankopplung wenigstens einer ring- oder scheibenförmigen Rotorkomponente des Scheibenläufers an das Getriebe nicht starr, sondern mittels wenigstens einer innerhalb des Generators, um dessen Rotationsachse rotierbar angeordneten, vorzugsweise elastischen Kraftübertragungsein-richtung.

Weitere Vorteile ergeben sich daraus, dass mindestens eine Rotorscheibe des Generators mit einem oder mehreren, direkt oder indirekt mit der Welle verbundenen und um die Hauptachse drehbar angeordneten Kupplungs- und/oder Dämpfungs-Elementen gekoppelt ist. Durch eine solche erfindungsgemäße Anordnung wird gewährleistet, dass sich die axial Lasten aus dem Magneten vorteilhaft symmetrisch verteilen, und dass ein exakter Lauf der Welle möglich ist und keine Verkippung auftritt, da kein Kippmoment entsteht.

In einer solchen Ausgestaltung können die Verbindungselemente als längliche, parallel zur Rotor-Hauptachse orientierte Koppelelemente ausgebildet sein, welche jeweils exzentrisch um die Hauptachse positioniert sind - bspw. kranzförmig um die Rotor-Hauptachse verteilt angeordnet - und insbesondere als massive Verbinder dienen, etwa als Schrauben oder Bolzen. Diese Verbinder können zum Zweck der Dämpfung, oder auch zum Toleranzausgleich bei der Montage sowie gegebenenfalls zu Zwecken einer gleichmäßigeren Kraftübertragung aus elastischem Material ausgeführt sein, insbesondere aus elastomerartigem oder kautschuk- oder gummiartigem Material bestehend. Sie können alternativ, wie beispielhaft in der vorteilhaftesten Ausgestaltung gezeigt, auch aus massivem, metallischen Material bestehen, oder auch aus optimierten Hohlprofilen, welche zum Zwecke der Dämpfung mit weicherem Material ummantelt sind.

Ferner entspricht es der Lehre der Erfindung, dass bei einer Kraftanlage mit Planetengetriebe und darin mittig gelagertem Sonnenrad die Getriebeausgangswelle und das Sonnenrad verdrehfest miteinander gekoppelt sind, oder auch ein einziges, gemeinsames Teil bilden.

Bevorzugt erfolgt die Lagerung der Getriebeabtriebswelle nicht innerhalb des Getriebes selbst, sondern in dem erfindungsgemäßen Generator oder zumindest in dem Übergangsbereich zwischen Geetriebe und Generator.

Dadurch kann die gesamte Dicke der Planetenräder für den Verzahnungseingriff mit dem verzahnten Bereich des Sonnenrades genutzt werden. Dieses verfügt über einen axialen Fortsatz, der in den Generator hineinragt und dort gelagert ist.

Für diese Lagerung bevorzugt die Erfindung ebenfalls ein oder mehrere Schrägkugellager, bevorzugt ein zweireihiges Schrägkugellager. Allerdings muß nicht zwangsweise ein einziges, zweireihiges Schrägkugellager vorgesehen sein, sondern es könnten bspw. auch bspw. zwei einreihige Schrägkugellager verwendet werden.

Bevorzugt ist dieses Lager direkt mechanisch gekoppelt mit einer getriebeseitig angetriebenen Welle bzw. mit einer den Generator antreibenden Welle. Dabei handelt es sich allerdings nicht um das weiter oben genannte Wälzlager, sondern um ein weiteres Wälzlager. Dieses zweite Wälzlager ist an dem Chassis, Gehäuse des Maschinenhauses bzw. der Gondel oder dem Gehäuse des Getriebes oder Generators, oder an einem sonstigen, daran festgelegten Teil angekoppelt. Dies kann bspw. derartig erfolgen, dass das Wälzlager mit dem betreffenden Teil direkt verschraubt oder verbunden ist, bspw. mit einem feststehenden Teil des Getriebes; in der bevorzugten Ausführungsform der Erfindung ist dieses zweite Wälzlager verschraubt mit dem Gehäuse und/oder mit dem Planetenradträger eines durch den Rotor und über ein Hohlrad angetriebenen Planetengetriebes. An diesem Planetenradträger sind in einer bevorzugten Ausgestaltungsform der Erfindung mehrere Planetenräder gelagert. In letzterem Falle sollte der feststehende Teil des Getriebes und/oder der Planetenträger eines Planetengetriebes mit dem Turm oder mit der Turmseite der Windkraftanlage fest gekoppelt oder verschraubt sein.

Die Erfindung sieht weiterhin vor, eine Windkraftanlage mit einem Getriehe und mit einem erfindungsgemäßen Scheibenläufer-Generator auszurüsten. In diesem Fall dient als Antriebsquelle das mittels Windenergie in Drehung versetzte Windrad. Von dessen Nabe wird die durch den Wind gewonnene Rotationsenergie an einen rotierbaren Ring des Rotor-Hauptlagers weitergeleitet. Bevorzugt ist dessen Außenring am Turm der Windkraftanlage fixiert, während die Nabe mit seinem Innenring verbunden, bspw. veschraubt, ist. Dieses bildet in der bevorzugten Ausgestaltung der Erfindung gleichzeitig das Hohlrad eines angeschlossenen Planetengetriebes und treibt mehrere Getriebeelemente, beispielsweise Planetenräder, an. Diese Antriebsenergie wird gemäß dem Prinzip des Getriebes an die Welle in Richtung der Hauptachse weitergegeben. In der vorteilhaftesten Ausgestaltung der Erfindung ist diese Welle mit dem Sonnenrad des Getriebes integriert oder verbunden. Die Achse des Sonnenrades und die Rotor-Hauptachse fallen also zusammen.

Weitere Merkmale, Einzelheiten, Vorteile und Wirkungen auf der Basis der Erfindung ergeben sich aus der folgenden Beschreibung einiger bevorzugter Ausführungsformen der Erfindung sowie anhand der Zeichnung. Hierbei zeigt:
- Fig_{.} 1: einen Vertikalschnitt durch das Maschinenhaus einer Windkraftanlage entlang der Hauptachse des Rotors, wobei der Turm und das Windrad abgebrochen dargestellt sind;
- Fig. 2: einen vergrößerten Ausschnitt aus Fig. 1 mit einer beispielhaften Lagerung des Generator-Rotors;
- Fig. 3: eine erfindungsgemäße Gesamtbaugruppe, worin Generator und Getriebe integriert sind, in einer perspektivischen Ansicht;
- Fig. 4: die Gesamtbaugruppe nach Fig. 3, in einer vertikalen Ebene entlang der Rotor-Hauptachse aufgeschnitten sowie in perspektivischer Sichtweise;
- Fig. 5: eine vergrößerte Ansicht des Details V aus Fig. 4;
- Fig. 6: eine der Fig. 5 entsprechende Detailansicht der Gesamtbaugruppe nach Fig. 3, jedoch aus einer anderen Perspektive; sowie
- Fig. 7: das Detail V aus Fig. 4, wobei die Schnittebene in die Zeichenebene gedreht ist.

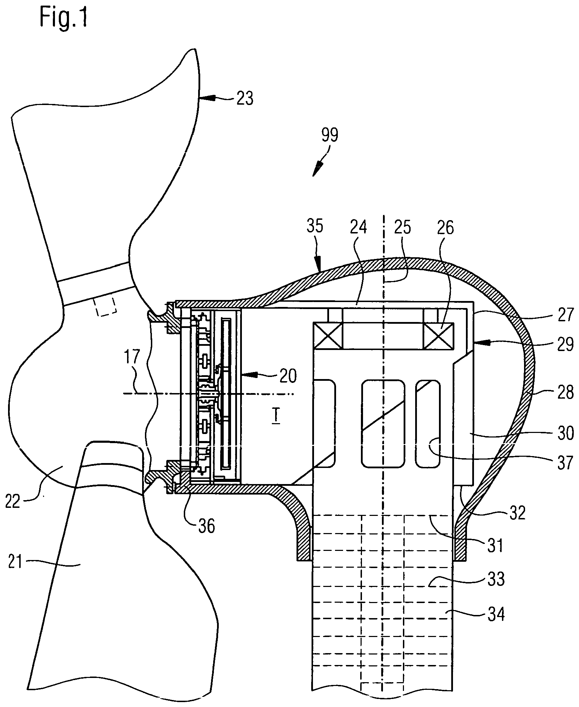

In Fig. 1 ist der Aufbau einer Gondel 35 einer Windkraftanlage 99 wiedergegeben, welche sich für den Einsatz eines erfindungsgemäßen Scheibenläufer-Generators eignet.

Man erkennt das obere Ende des Turms 34 von kreisförmigem Querschnitt, woran über ein in horizontal liegender Position eingebautes Maschinenhauslager 26 zur Azimutverstellung die Gondel 35 um die vertikale Turmachse 25 verschwenkbar aufgesetzt ist. Während ein Ring dieses Maschinenhauslagers 26 an der Oberseite des Turms 34 festgelegt ist, so kann der andere Ring mittels eines nicht dargestellten Antriebs um die Turmachse 25 verschwenkt werden.

An dem verschwenkbaren Ring des Maschinenhauslagers 26 stützt sich eine obere Platte oder ein Rahmen 24 einer um die Turmachse 25 schwenkbaren Tragstruktur 29 ab. Diese Tragstruktur 29 bildet sozusagen die innere Hülle des Maschinenhauses 35 und kann vom Wartungspersonal durch einen Aufzug, eine Leiter 33 oder Treppe in dem Turm 34 sowie durch seitliche Ausstiegsöffnungen 37 in der Wand des Turms 34 erreicht werden.

Die innere Hülle bzw. Tragstruktur 29 kann eine rückwärtige Wand 27 aufweisen, eine Bodenplatte 32 mit einer Ausnehmung für den Turm 34, sowie seitliche Wandplatten, welche die Bodenplatte 32, rückwärtige Wand 27 und die obere Platte oder den Rahmen 24 miteinander verbinden und damit für eine ausreichende Steifheit der Tragstruktur 29 Sorge tragen. An ihrer der rückwärtigen Wand 27 etwa gegenüber liegenden Seite sind die Bodenplatte 32, die seitlichen Wandplatten und die obere Platte oder der Rahmen 24 verlängert bis zu einem etwa kreisförmigen Mündungsbereich 36.

Der gesamte Raum innerhalb der Tragstruktur 29 hinter dieser Mündung 36 ist von einer Verkleidung 28 außen umgeben, die aus aerodynamischen Gründen einem sanft gewölbten Verlauf folgt und Wind und Wetter von dem Innenraum abhalten soll.

Vor der Mündung 36 befindet sich das eigentliche Windrad 23, welches zusätzlich zu der Azimutverschwenkung der Gondel 35 umd die Turmachse 25 einen weiteren Freiheitsgrad der Bewegung aufweist, nämlich den einer Drehung um eine zweite Achse, die sogenannte Rotor-Hauptachse 17, die im Bereich der Gondel 35 in etwa horizontaler Richtung von der Turmachse 25 weg ragt. Das Windrad 23 seinerseits besteht aus einer Nabe 22, von der mehrere Flügel oder Blätter 21 in etwa radialer Richtung, bezogen auf die Rotor-Hauptachse 17 weg ragen und mittels Blattlagern um ihre Längsachse verdrehbar an der Nabe 22 gelagert sein können.

Die verdrehbare Lagerung der Nabe 22 um die Rotor-Hauptachse 17 sowie der Abgriff der Rotationsenergie kann mittels einer Baugruppe 20 erfolgen, die mehrere Funktionseinheiten umfassen kann, nämlich das eigentliche Haupt- oder Rotorlager 4, ein Getriebe 13, insbesondere ein Übersetzungsgetriebe, sowie einen Generator 14.

In der dargestellten Ausführungsform befindet sich der Generator 14 - in einer Richtung entlang der Rotor-Hauptachse 17 betrachtet - zwischen dem Getriebe 13 und dem Turm 34. Dank seines prinzipiellen Aufbaus als Scheibenläufer hat der Generator 14 einen insgesamt scheibenförmigen Aufbau mit zwei einander gegenüber liegenden, von der Rotor-Hauptachse 17 Stirnseiten, wobei die dem Getriebe 13 zugewandte Stirnseite als Getriebeseite G und die dem Turm 34 zugewandte Stirnseite als Turmseite T bezeichnet werden soll. An der Getriebeseite G wird die Rotationsenergie in den Generator 14 eingeleitet.

Die Baugruppe 20 ist in einem gemeinsamen Gehäuse integriert, welches jedoch aus mehreren Teilen bestehen kann, welche insbesondere dem Getriebe 13 einerseits sowie dem Generator 14 andererseits zugeordnet sein können und bspw. mittels am Umfang kranzförmig angeordneter Befestigungsmittel untereinander verbindbar sind. Zu diesem Zweck weisen die verschiedenen Gehäuseteile an ihrem Außenumfang mehrere, zur Rotor-Hauptachse 17 parallele Bohrungen auf, welche jeweils paar- oder tripelweise miteinander fluchten und zum gemeinsamen Hindurchstecken von Schrauben, Schraubbolzen od. dgl. dienen, womit die betreffenden Gehäuseteile untereinander verbunden werden können und gleichzeitig die gesamte Baugruppe 20 an einem dafür ausersehenen Bereich 36 der Tragstruktur 29 unverrrückbar verankert, insbesondere festgeschraubt werden kann.

Das Hauptlager 4 befindet sich an einem der Nabe 22 zugewandten Gehäusebereich des Getriebes 13 und weist zwei zueinander konzentrische Ringe auf, von denen der Außenring mit dem Gehäuse des Getriebes 13 integriert ist und somit drehfest mit der Maschinenhausgondel 35 verbunden wird, während der Innenring als ringförmiges, an seiner Innenseite verzahntes Hohlrad 16 des als Planetengetriebe ausgebildeten Getriebes 13 ausgestaltet ist. Zum Anschluß der Nabe 22 sind in dem Hohlrad 16 mehrere, kranzförmig um die Rotor-Hauptachse 17 verteilt angeordnete Befestigungsbohrungen vorgesehen, bspw. Sacklochbohrungen mit Innengewinde.

Der Planetenradträger 3 des Getriebes 13 ist mit dem Gehäuse des Getriebes 13 integriert oder unverdrehbar verbunden. An daran befestigten Lagerungshülsen sind mehrere, außen verzahnte Planetenräder 2 drehbar gelagert, welche mit dem Hohlrad 16 einerseits kämmen sowie mit einem zentralen, außen verzahnten Sonnenrad 15 andererseits. Das Sonnenrad 15 ist hohl ausgebildet, weist also eine zentrale Ausnehmung auf, wodurch bspw. die Nabe 22 zugänglich ist. Da die Drehachse des Sonnenrades 15 mit der Rotor-Hauptachse 17 zusammenfällt, fluchtet sie auch mit der Symmetrieachse der Nabe 22 des Windrades 23.

Die der Nabe 22 zugewandte Seite des Getriebes ist nicht von dem Getriebegehäuse abgedeckt, sondern von einer mit dem Hohlrad 16 drehfest verbundenen Ringscheibe abgedeckt; sie kann relativ dünn ausgebildet sein, da sie keine wesentliche tragende Funktion erfüllt, sondern vor allem dem Abschluß bzw. Verkleidung des Getriebes 13 zur Nabe 22 hin dient. Diese Verkleidung rotiert demnach mit der Nabe 22 mit. Dies gilt auch für einen zentralen, hülsenförmigen Fortsatz 1 dieser Verkleidung, welcher die zentrale Ausnehmung in dem Sonnenrad 15 durchgreift und sich konzentrisch zur Rotor-Hauptachse 17 von der nabenseitigen Getriebe-Verkleidung nach hinten, also in Richtung zum Turm 34, erstreckt, und zwar bevorzugt sowohl durch das Getriebe 13 als auch durch den Generator 14 hindurch. Demnach rotoert auch dieser hülsenförmige Fortsatz 1 nur mit der vergleichsweise langsamen Drehzahl der Nabe 22 und bietet daher die Möglichkeit, die Nabendrehzahl innerhalb des Maschinenhauses 35 exakt bestimmen und überwachen zu können, während durch den von der Hülse 1 umschlossenen Hohlraum bei geringem Wind sogar eine visuelle Inspektion der Nabe 22 während des laufenden Betriebs möglich ist.

Die von der zusammen mit dem Hohlrad 16 rotierenden Verkleidung gebildete, der Nabe zugewandte Seite des Getriebes 13 bildet dessen Antriebsseite, während die gegenüber liegende, dem Turm 34 zugewandte Getriebeseite als dessen Abtriebseite dient. Dort ragt das Sonnenrad 15 des Getriebes 13 durch eine zentrale Ausnehmung in dem betreffenden, mit dem Planetentradträger 3 integrierten Gehäusebereich 13 hindurch und erstreckt sich in den anschließenden Bereich des Generators 14 hinein, um die Rotationsenergie von dem Getriebe 13 auf den Generator 14 zu übertragen, In diesem Bereich ist das Sonnenrad 15, welches nicht an dem hülsenförmigen Fortsatz 1 gelagert ist, an dem Gehäuse des Getriebes 13 bzw. an dem damit integrierten bzw. verbundenen Planetenradträger 3, und/oder an einem dortigen Gehäuseabschnitt des Generators 14 gelagert. Indem die betreffende Lagerung 12 von dem Getriebe 13 in den Generator 14 verlegt ist bzw. zumindest in den Übergangsbereich zwischen Getriebe 13 und Generator 14, kann sich die mit den Planetenrädern 2 kämmende Verzahnung des Sonnenrades 15 über die gesamte, zur Rotor-Hauptachse 17 parallele Dicke der Planetenräder 2 erstrecken.

Das Lager 12 des als Abtriebswelle des Gestriebes 13 dienenden Sonnenrades 15 ist bevorzugt als Schrägkugellager ausgebildet, beispielsweise als zweireihiges Schrägkugellager, insbesondere als zweireihiges Schrägkugellager in O-Anordnung, d.h., wobei die Tragachsen aller in einer gemeinsamen Schnittebene entlang der Rotor-Hauptachse 17 liegenden Kugeln eine Raute bilden, im Gegensatz zu der sog. X-Anordnung der Kugel-Tragachsen. Die radial innen liegenden Laufbahnen dieses Lagers 12 können entweder an dem Fortsatz des Sonnenrades 15 direkt angeordnet, insbesondere eingearbeitet sein, oder in einem separaten Innenring, des Lagers 12, der an dem Sonnenrad 15 bzw. an dessen in axialer Richtung in das Getriebe 14 hinein ragenden Fortsatz außen bündig anliegt. Währenddem kann sich der Außenring des Lagers 12 direkt an einem Abschnitt des Gehäuses von Getriebe 13 und/oder Generator 14 abstützen. Der Außenring kann bspw. an dem scheibenförmigen Planetenradträger 3 angeschraubt sein und sich von dort in den Generator 14 hinein erstrecken. Das Lager 12 könnte anstelle einer direkten Verschraubung mit dem Gehäuse des Getriebes 13 oder Generators 14 auch mit einem anderen fixen Element des Generatorträgers fest verbunden sein.

Gemäß der Zeichnung ist der Durchmesser des turmseitigen Fortsatzes an dem Sonnenrad 15 bei der dargestellten Ausführungsform kleiner als der Durchmesser des Sonnenrades 15 selbst.

Der Fortsatz des Sonnenrades 15 in axialer Richtung jenseits des Lagers 12, welcher also dem Turm 34 zugewandt ist, dient der Einleitung der Rotationsenergie in den Generator 14 und kann an seinem radialen Außenumfang zum Abgriff der Rotationsenergie ebenfalls eine Verzahnung oder eine andere, für die Übertragung von Drehmomenten geeignete Profilierung aufweisen. Darauf ist ein Wellenring 10 unverdrehbar festgelegt, der an seiner Innenseite vorzugsweise eine zu der Profilierung des Sonnenrades 15 komplementäre Profilierung aufweist; bei kleineren Anlagen könnte anstelle einer rundumlaufenden Profilierung auch eine Nut-Feder-Verbindung verwendet werden. In jedem Fall ist bei den üblichen Nennleistungen professioneller Kraftanlagen eine formschlüssige Verbindung zwischen Wellenring 10 und Sonnenrad 15 einer reibschlüssigen Verbindung vorzugziehen.

Der Wellenring 10 kann eine größere Erstreckung in axialer Richtung aufweisen als in radialer Richtung, so dass seine Gestalt als etwa scheibenförmig bezeichnet werden könnte. Er wird entlang seiner Peripherie von mehreren Ausnehmungen in axialer Richtung durchsetzt, worin zur Rotor-Hauptachse 17 parallele Stifte 9 eingesetzt und verankert sind. Bevorzugt tragen diese an ihren aus dem Wellenring 10 heraus ragenden bzw. überstehenden Bereichen je eine Hülse aus einem elastischen Material, bspw. mit einem zylindrischen oder tonnenförmigen Außenumfang. Diese Hülsen können bspw. mittels endseitig auf den jeweiligen Stift 9 aufgesetzter und mittels Schrauben fixierter Kappen festgehalten werden.

Jede dieser Hülsen greift in je eine Ausnehmung in einer weiteren Scheibe 8 ein, welche sich in radialer Richtung teilweise mit dem Wellenring 10 überlappt, jedoch einen größeren Außendurchmesser hat als der Wellenring 10.

Diese Anordnung mit dem Wellenring 10, den Stiften 9, ggf. diese umgebenden Hülsen und der Scheibe 8 bietet eine gewisse Elastizität, weche insbesondere bei ruckartige Drehbewegungen, Lastwechseln oder Lastüberhöhungen eine gewisse Dämpfung von Stößen bewirken kann und also insbesondere gegenüber höherfrequenten Anteilen der Drehbbewegung einen gewissen Spielraum zuläßt, mithin Beschädigungen von den nachgeschalteten Teilen der Anlage bzw. des Generators 14 fernhalten soll.

Von der Scheibe 8 wird die Rotationsenergie über die - gedämpfte - Drehbewegung an die bewegliche Rotor-Baugruppe 5 des Scheibenläufer-Generators 14 weitergegeben. Diese Rotor-Baugruppe 5 hat in der dargestellten Ausführungsform einen etwa µ-förmigen Querschnitt, also mit zwei zueinander parallelen Schenkeln, welche durch einen Steg miteinander verbunden sind, wobei einer der beiden Schenkel sich über den Steg hinaus - also beiderseitig des Steges - erstreckt. Dabei weisen die beiden zueinander parallelen Schenkelenden radial nach außen, während das dritte Schenkelende radial nach innen, also zur Rotor-Hauptachse 17 hin verläuft und dort in einen zu dieser Achse 17 parallelen Verlauf übergehen kann.

Die beiden zueinander parallelen, radial nach außen weisenden Schenkel des Querschnitts entsprechen zwei ringscheibenförmigen Bereichen mit einem nutförmigen Raum dazwischen, worin Magnete, vorzugsweise Permanentmagnete, untergebracht sein können, deren Magnetfelder sodann mit statorseitigen Wicklungen 6, 7 verkettet werden und bei Drehung der Rotor-Baugruppe 5 um die Rotor-Hauptachse 17 dort Spannungen induzieren, welche bei einem angeschlossenen Verbraucher einen Strom durch diese Wicklungen 6, 7 treiben und damit zur Einspeisung der in elektrische Energie umgewandelten Antriebsleistung in ein Stromnetz verwendet werden können.

Für einen optimalen Wirkungsgrad ist es wichtig, dass der die Magnete tragende Bereich der Rotor-Baugruppe 5 möglichst gleiche oder jedenfalls vorgegebene Abstände zu den getriebe- und turmseitigen Statorwicklungen 6, 7 einhält. Dies wird gewährleistet durch eine eigene Drehlagerung 11 der betreffenden, etwa scheibenförmigen Rotor-Baugruppe 5. Es handelt sich hierbei um eine Wälzlagerung, beispielsweise eine Kugellagerung, bevorzugt um ein Schrägkugellager, vorzugsweise um ein zweireihiges Schrägkugellager, insbesondere ein zweireihiges Schrägkugellager von der sog. O-Bauform. Die Erfindung empfiehlt, dass dabei die Kugeln beider oder aller Kugelreihen zumindest an jeweils einer Laufbahn entlang rollen, welche an einem gemeinsamen Ring des Lagers 11 - also an dessen Innen- oder Außenring - ausgebildet sind, welcher ein erstes Anschlußelement des betreffenden Lagers 11 bildet, während das jeweils andere Anschlußelement des Lagers 11 je nach Ausführungsform als einteiliger Ring ausgeführt sein kann oder - bspw. zur Erhöhung der Elastizität - auch aus mehreren Ringen bestehen kann.

Bevorzugt ist ein derartiges Anschlußelement - bevorzugt das radial äußere - an dem radial nach innen weisenden Schenkel der Rotor-Baugruppe 5 angeschlossen, und kann zu diesem Zweck über einen an der Außenseite rundum laufenden Flansch verfügen mit einer oder vorzugsweise mehreren, kranzförmig über den Umfang verteilt angeordneten Befestigungsmitteln, insbesondere Durchgangsausnehmungen zum Hindurchstecken von Schrauben, Stiften od. dgl., welche gleichzeitig auch je eine damit fluchtende Bohrungen in dem nach innen weisenden Schenkel der Rotor-Baugruppe 5 durchgreifen und außerdem noch in je eine weitere Bohrung in der Scheibe 8 eingreifen können, um diese Scheibe 8, die Rotor-Baugruppe 5 und den Außenring des Lagers 11 drehfest miteinander zu verbinden.

Das jeweils andere Anschlußelement des Lagers 11 - vorzugsweise das radial innere - stützt sich an dem Gehäuse des Generators 14 ab, und ist vorzugsweise an dem getriebeseitigen Gehäuseschild des Generators 14 verdrehfest verankert, bspw. mittels einer oder vorzugsweise mehrerer, kranzförmig über seinen Umfang verteilt angeordneter, zur Rotationsachse 17 paralleler Schrauben, Gewindebolzen od. dgl.

Neben der präzisen Lagerung der betreffenden, querschnittlich µ-förmigen Rotor-Baugruppe 5 dient deren radial nach innen weisender Steg auch der Aufnahme der Rotationsenergie von der Scheibe 8 durch Einleitung eines Drehmoments. Diese Drehmomenteinleitung erfolgt bevorzugt durch einen Formschluß, welcher mittels der oben erwähnten, zur Rotor-Hauptachse 17 etwa parallelen Stifte bewirkt werden kann, und/oder durch formschlüssiges Ineinandergreifen zueinander komplementärer Profilierungen an der Rotor-Baugruppe 5 einerseits und an der Scheibe 8 andererseits.

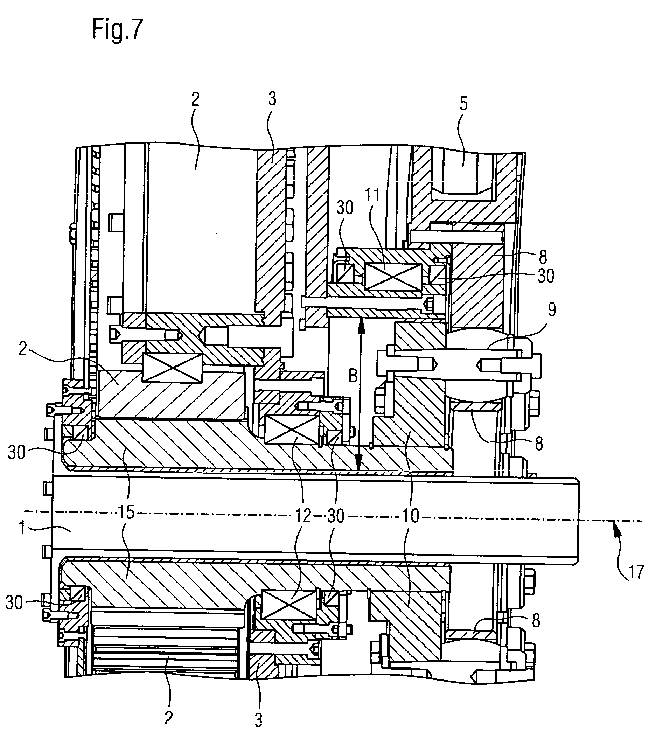

Wie Fig. 7 zeigt, ist der Innendurchmesser des radial innenliegenden Rings der Wälzlagerung 11 um einen Abstand B größer als der Außendurchmesser der die zentrale Ausnehmung in der Abtriebshohlwelle 15 des Getriebes 13 durchsetzenden, synchron mit der Nabe 22 des Windrades 23 rotierenden Hohlwelle 1. Natürlich ist der Innendurchmesser des radial innenliegenden Rings der Wälzlagerung 11 ebenfalls um einen Abstand C größer als der Außendurchmesser der Abtriebswelle 15 des Getriebes 13 selbst. Der Abstand B beträgt zwischen 1 cm und weit mehr als 50 cm und ist abhängig von der Gesamtgröße der Baugruppe 20 und natürlich wesentlich abhängig von der Gesamtleistung der Windenergieanlage 99. Auch der Abstand C sollte größer sein als 1 cm, beispielsweise größer als 5 cm, bevorzugt größer als 15 cm, insbesondere größer als 50 cm oder sogar größer als 100 cm.

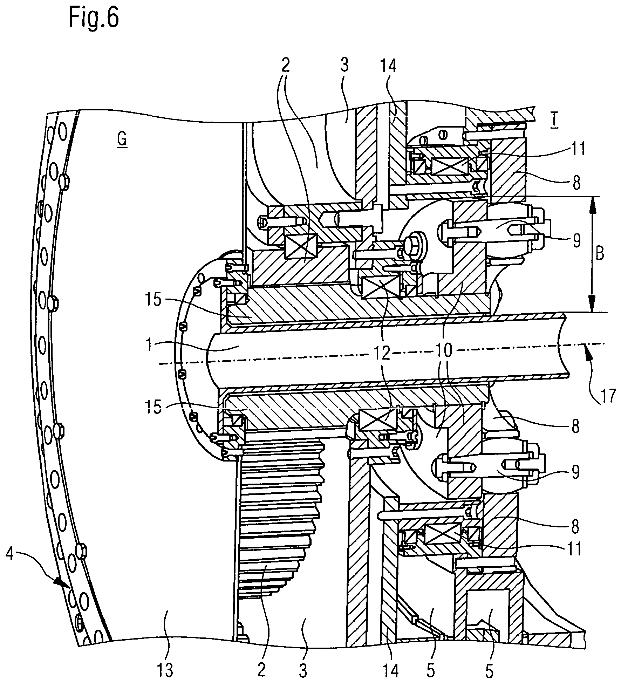

Bei sämtliche Lagerungen 11, 12 kann der jeweilige Luftspalt an einer oder vorzugsweise beiden Lagerstirnseiten durch eine Dichtung gegenüber der Umgebung abgeschlossen sein. Dies bietet die weitere Möglichkeit, den solchermaßen abgeschlossenen Luftspalt-Bereich mit einem Schmiermittel, bspw. Schmierfett, zu füllen. Insbesondere sieht man in Fig. 6 gut dargestellt die Dichtungselemente 30, welche als Wellendichtungen oder Großwälzlagerdichtungen ausgeführt sein können, beispielsweise aus kautschuk- oder gummiartigen Materialien und/oder mit einer oder ggf. auch mit mehreren Dichtlippen, ggf. auch mit Spannringen, etc.

Während die getriebeseitige Statorwicklung 6 direkt an der Getriebeseite G des Gehäuses des Generators 14 verankert ist, bspw. angeschraubt, ist die turmseitige Statorwicklung 7 an der Turmseite T des Generators mit einem dortigen Gehäuseabschnitt verbunden. Dieser Gehäuseabschnitt kann im Bereich seines Außenumfangs - oder demgegenüber radial nach innen zurückversetzt - über einen dortigen, zylindermantelförmigen Gehäuseabschnitt mit dem getriebeseitigen Gehäuseabschnitt verbunden sein.

Obzwar die Drehbewegung der mindestens einen ring- oder scheibenförmigen Rotorkomponente 5 zwischen den ersten und zweiten Statorkomponenten 6, 7 berührungslos, insbesondere reibungslos, erfolgt, tritt gemäß dem Grundsatz "actio = reactio" bei der Umwandlung der Rotationsenergie in elektrische Energie in der Statorwicklung ein Gegenmoment zu dem Bremsmoment des Rotors 5 auf. Das Gehäuse des Generators 14 muß dieses im Stator auftretende Drehmoment in die Tragstruktur 29 des Turms 34 der Windkraftanlage 99 einleiten und aus diesem Grund ausreichend stabil ausgebildet sein sowie auch mit ausreichender Festigkeit an dem Generatorträger bzw. der Tragstruktur 29 des Turms 34 der Windkraftanlage 99 verankert sein, was bevorzugt mittels einer großen Anzahl von um die Rotationsachse 17 kranzförmig verteilt angeordneten Befestigungsmitteln erfolgen kann, insbesondere mittels zu der Rotationsachse 17 parallelen Schrauben, Gewindebolzen od. dgl.

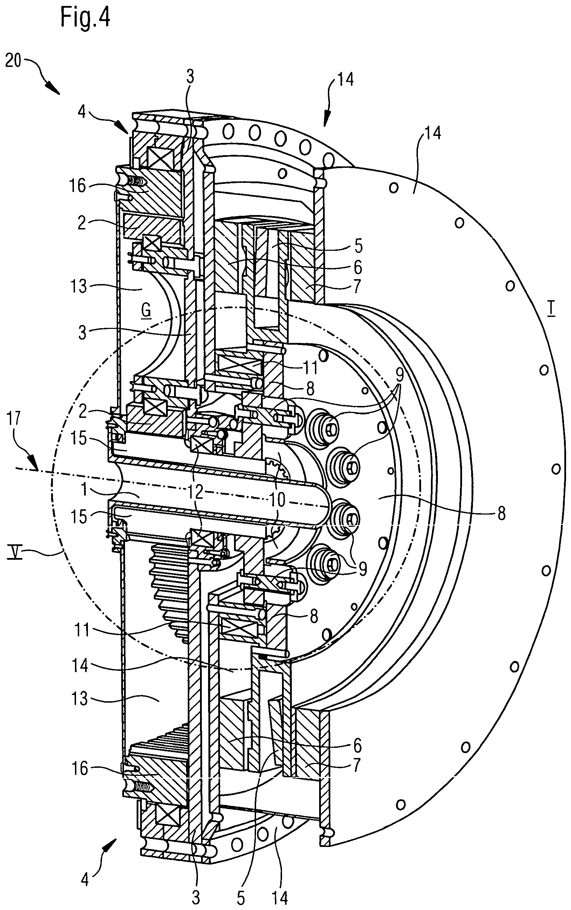

In der Schnittdarstellung gemäß Fig. 4 ist gut erkennbar, dass die turmseitigen Statorkomponenten 7 über einen ringförmigen Gehäuseabschnitt des Generators 14 an der Turmseite T befestigt sind. Infolge der großen, zentralen Ausnehmung in diesem Gehäuseabschnitt, deren Durchmesser dem radial inneren Durchmesser der turmseitigen Statorwicklungen 7 entsprechen kann, sind viele wesentliche Elemente der Baugruppe 20 von der Turmseite T ohne Demontage aus zugänglich. Im Falle von Montage, Dichtungsinspektion, Nachschmierung, Wartung, Reparaturen und sonstigem Service sowie für den Austausch von Komponenten sind die turmseitigen Elemente der Erfindung für den Servicetechniker gut erreichbar. Durch sequentiellen Ausbau einzelner Komponenten von der Turmseite T aus, beispielsweise in folgender Reihenfolge: Zuerst wird das turmseitige Gehäuseteil des Generators 14 ausgebaut, zusammen mit oder gefolgt von dem turmseitigen Statorteil 7; dadurch wird die Rotorscheibe 5 freigelegt und ist somit erreichbar. Sobald die Rotorscheibe 5 entfernt ist, kann auch auf das getriebeseitige Rotorelement 6 zugegriffen werden. Falls auch dieses sowie das getriebeseitige Gehäuseteil ausgebaut wird, besteht Zugriff auf das dahinter angeordnete Getriebe 13.

Falls die Rotor-Baugruppe 5 von der Scheibe 8 abkuppelbar ist, kann letztere demontiert werden, ohne den Magnet- und Wicklungsbereich des Generators 14 vollständig ausbauen zu müssen; es ist vielmehr nur eine vorübergehende Fixierung der Rotor-Baugruppe 5 erforderlich. Nach Demontage der Scheibe 8 besteht Zugang zu dem dahinter angeordneten Lager 11, und - nach anschließendem Entfernen des Wellenrings 10 - auch Zugang zu dem Lager 12 für das Sonnenrad 15 des Getriebes 13.

Die stiftförmigen Verbindungselemente 9 sind ohnehin unmittelbar zugänglich.

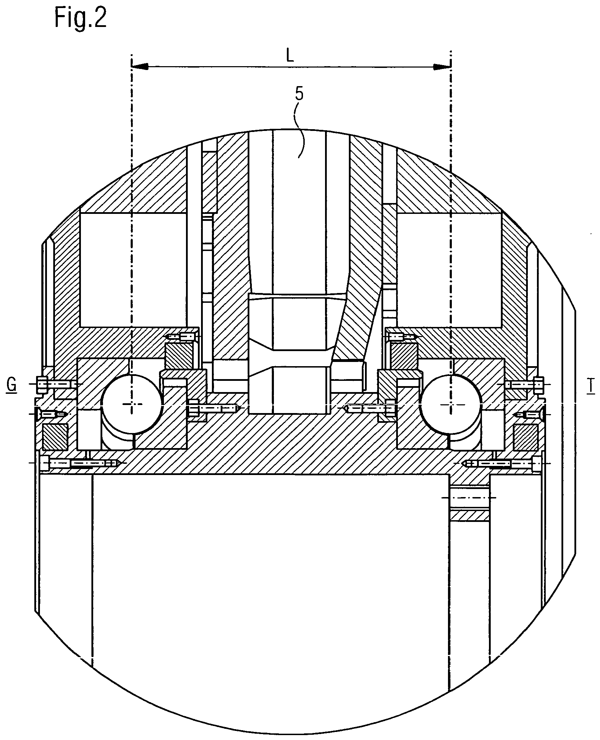

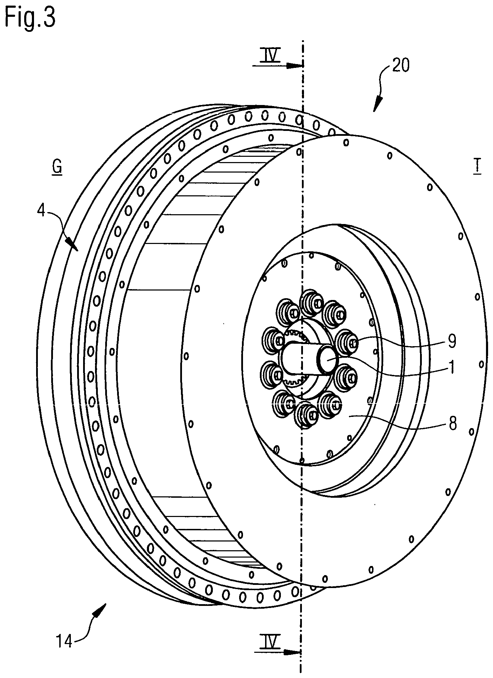

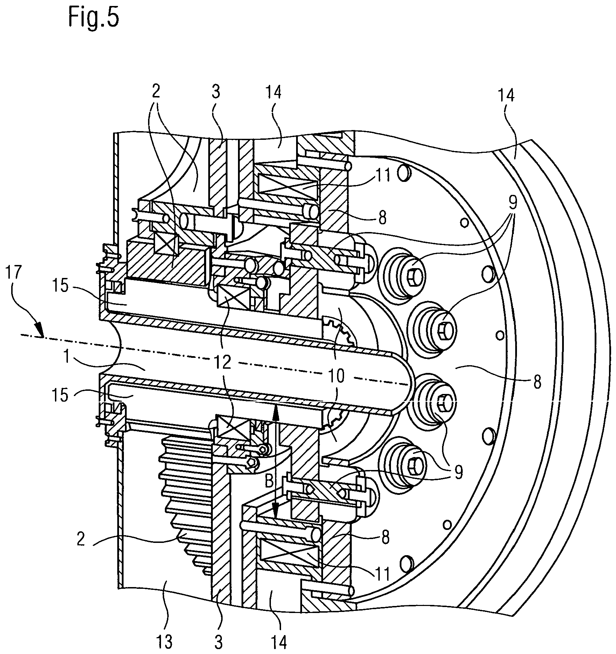

Im Gegensatz zu der zuvor beschriebenen Ausführungsform gemäß Fig. 1 sowie Fig. 3 bis 7 zeigt die Fig. 2 eine abgewandelte Ausführungsform. Dabei werden zwecks Lagerung der elektrischen Maschine bzw. der Rotor-Baugruppe 5 zwei voneinander getrennte Lager an gegeneinander beabstandeten Lagerorten verwendet, inmitten derer sich der zu lagernde Elektrorotor 5 befindet. Beispielsweise befindet sich an jedem dieser zwei Lagerorte je ein einreihiges Kugellager, wobei deren Grundebenen parallel zueinander orientiert, aber um eine Länge L voneinander beabstandet sind. Das eine dieser Lager ist dann an der Getriebeseite G angeordnet, das andere an der Turmseite T. Zwischen beiden Lagern erstreckt sich die Rotor-Baugruppe 5 der elektrischen Maschine bzw. des Generators 14 Bevorzugt sollten hierbei jeweils Schrägkugellager verwendet werden, deren Tragachsen nach einer Radialrichtung hin - vorzugsweise nach radial außen - zueinander konvergieren, ähnlich einer O-Anordnung. Andererseits wäre grundsätzlich natürlich auch eine X-Anordnung denkbar.

**Bezugszeichenliste**

| | | | |
|---|---|---|---|
| 1 | Welle, Hülse | 28 | Verkleidung |
| 2 | Planetenrad | 29 | Tragstruktur |
| 3 | Planetenradträger | 30 | Dichtungselement |
| 4 | Hauptlager | 31 | Öffnung |
| 5 | Rotorscheibe | 32 | Bodenplatte |
| 6 | Statorkomponente | 33 | Leiter |
| 7 | Statorkomponente | 34 | Turm |
| 8 | Kupplungsscheibe | 35 | Gondel |
| 9 | Dämpfungselemente | 36 | Mündungsbereich |
| 10 | Wellenring | 37 | Ausstiegsöffnung |
| 11 | Wälzlager | 99 | Windkraftanlage |
| 12 | Wälzlager | L | Abstand |
| 13 | Getriebe | G | Getriebeseite |
| 14 | Generator | T | Turmseite |
| 15 | Sonnenrad | | |
| 16 | Hohlrad | | |
| 17 | Rotationsachse | | |
| 20 | Baugruppe | | |
| 21 | Rotorblatt | | |
| 22 | Nabe | | |
| 23 | Windrad | | |
| 24 | Rahmen | | |
| 25 | Turmachse | | |
| 26 | Maschinenhauslager | | |
| 27 | Wand | | |

## Patentansprüche

1. Scheibenläufer-Generator zur Erzeugung elektrischer Energie aus der Rotationsenergie einer drehangetriebenen Kraftanlage, vorzugsweise einer Strömungskraftanlage, insbesondere einer Windkraftanlage, mit wenigstens zwei entlang einer etwa horizontalen Rotationsachse (17) des Scheibenläufers axial gegeneinander versetzten Statorkomponenten (6,7) sowie mit wenigstens einer dazwischen um die Rotationsachse (17) rotierend gelagerten, ring- oder scheibenförmigen Rotorkomponente (5) des Scheibenläufers, mit einem eingangsseitigen Anschluß für ein Getriebe, vorzugsweise ein Übersetzungsgetriebe, insbesondere ein Planetengetriebe, wobei dessen Ausgangswelle, insbesondere dessen Sonnenrad, welche koaxial zu der Rotationsachse (17) des Scheibenläufers verläuft, mit wenigstens einer ring- oder scheibenförmigen Rotorkomponente (5) des Scheibenläufers gekoppelt ist, **dadurch gekennzeichnet, dass** einer ring- oder scheibenförmigen Rotorkomponente (5) des Scheibenläufers eine Wälzlagerung (11) zugeordnet ist, die
a) als oder mit Schrägkugellager(n) ausgebildet ist, beispielsweise mit einem Tragwinkel zwischen 40° und 50° gegenüber der Rotationsachse (17), vorzugsweise als zweireihiges Schrägkugellager, insbesondere als zweireihiges Schrägkugellager in O-Anordnung,
b) von der Abtriebswelle (15) des Getriebes (13) oder einem drehfest daran gekoppelten Teil durchgriffen wird und einen radial innen liegenden Ring aufweist, dessen Innendurchmesser einen radialen Abstand (C) zu dem Außendurchmesser der Abtriebswelle (15) des Getriebes (13) aufweist.

2. Scheibenläufer-Generator nach Anspruch 1, **dadurch gekennzeichnet, dass** allen Wälzlagern (11) für eine ring- oder scheibenförmige Rotorkomponente (5) des Scheibenläufers wenigstens ein Laufbahnring gemeinsam ist.

3. Scheibenläufer-Generator nach Anspruch 1 oder 2, **dadurch gekennzeichnet, dass** der minimale Innendurchmesser der einer ring- oder scheibenförmigen Rotorkomponente (5) des Scheibenläufers zugeordnete Wälzlagerung (11) einen radialen Abstand (B) zu dem Außendurchmesser der Ausgangswelle des Getriebes aufweist, der 1 cm beträgt oder mehr, beispielsweise 5 cm oder mehr, bevorzugt 15 cm oder mehr, vorzugsweise 50 cm oder mehr, insbesondere 100 cm oder mehr.

4. Scheibenläufer-Generator nach einem der vorhergehenden Ansprüche, **dadurch gekennzeichnet, dass** ein die Wälzlagerung (11) durchgreifender Bereich der Ausgangswelle des Getriebes (13) jenseits der durchgriffenen Wälzlagerung (11), d.h. jenseits ihrer dem Turm (34) zugewandten Stirnseite, mit wenigstens einer ring- oder scheibenförmigen Rotorkomponente (5) des Scheibenläufers gekoppelt ist.

5. Scheibenläufer-Generator nach Anspruch 4, **dadurch gekennzeichnet, dass** die Kopplung zwischen der Ausgangswelle des Getriebes (13) und mit wenigstens einer ring- oder scheibenförmigen Rotorkomponente (5) des Scheibenläufers nicht starr ausgebildet ist, sondern mittels wenigstens einer innerhalb des Generators, um dessen Rotationsachse (17) rotierbar angeordneten Einrichtung zur elastischen Kraftübertragung (8-10).

6. Scheibenläufer-Generator nach Anspruch 5, **dadurch gekennzeichnet, dass** die Einrichtung zur Kraftübertragung wenigstens zwei rotierende Elemente aufweist, von denen eines als Kupplungsscheibe (8) ausgebildet ist, und/oder wenigstens eines als Wellenring (10).

7. Scheibenläufer-Generator nach Anspruch 6, **dadurch gekennzeichnet, dass** die beiden rotierenden Elemente (8,10) mittels wenigstens eines Verbindungselementes (9) verdrehfest miteinander gekoppelt sind.

8. Scheibenläufer-Generator nach Anspruch 7, **dadurch gekennzeichnet, dass** wenigstens ein Verbindungselement (9) als längliches und parallel sowie exzentrisch zu der Rotationsachse (17) des Generators orientiertes Koppelelement ausgebildet ist, insbesondere als Schraube oder Bolzen oder Verbinder.

9. Scheibenläufer-Generator nach Anspruch 8, **dadurch gekennzeichnet, dass** wenigstens ein Koppelelement aus einem elastischen Material besteht, beispielsweise aus elastomerartigem, kautschuk- oder gummiartigen Material, und/oder von einem solchen Material ummantelt ist.

10. Scheibenläufer-Generator nach einem der Ansprüche 7 bis 9, **dadurch gekennzeichnet, dass** mehrere Koppelelemente kranzförmig um die Rotationsachse (17) des Generators verteilt angeordnet sind.

11. Scheibenläufer-Generator nach einem der Ansprüche 4 bis 10, **dadurch gekennzeichnet, dass** die Ausgangswelle des Getriebes (13) an dem Gehäuse des Generators und/oder des Getriebes mit wenigstens einem Wälzlager (12) gelagert ist, welches sich getriebeseitig der Kopplung zwischen der Getriebe-Ausgangswelle einerseits und wenigstens einer ring- oder scheibenförmigen Rotorkomponente (5) des Scheibenläufers andererseits befindet.

12. Scheibenläufer-Generator nach Anspruch 11, **dadurch gekennzeichnet, dass** die Ausgangswelle des Getriebes (13) von dem Innenring ihres Wälzlagers (12) außen umgriffen wird, während der Außenring dieses Wälzlagers (12) seinerseits von dem Gehäuse des Generators (14) und/oder des Getriebes (13) außen umgriffen wird.

13. Scheibenläufer-Generator nach einem der Ansprüche 11 oder 12, **dadurch gekennzeichnet, dass** wenigstens ein Wälzlager (12) für die Ausgangswelle des Getriebes (13) als Schrägkugellager ausgebildet ist, vorzugsweise als zweireihiges Schrägkugellager, insbesondere als zweireihiges Schrägkugellager in O-Anordnung.

14. Windkraftanlage mit einem Getriebe und einem Scheibenläufer-Generator zur Erzeugung elektrischer Energie nach einem der vorhergehenden Ansprüche.

## Claims

1. A disk armature generator for generating electrical energy from the rotational energy of a power installation that is driven in rotation, preferably a turbine power installation, in particular a wind power installation, comprising at least two stator components (6, 7) that are mutually offset axially along an approximately horizontal rotation axis (17) of the disk armature, and comprising, mounted therebetween so as to rotate about the rotation axis (17), at least one ring-shaped or disk-shaped rotor component (5) of the disk armature, comprising an input-side connection for a gearbox, preferably a step-up gearbox, in particular a planetary gearbox, wherein the output shaft thereof, in particular the sun gear thereof, which extends coaxially with the rotation axis (17) of the disk armature, is coupled to at least one ring-shaped or disk-shaped rotor component (5) of the disk armature, **characterized in that** a rolling bearing (11) is associated with a ring-shaped or disk-shaped rotor component (5) of the disk armature, which
a) is formed as an angular contact ball bearing or with angular contact ball bearings, for example having a contact angle of between 40° and 50° relative to the rotation axis (17), preferably as a double-row angular contact ball bearing, in particular as a double-row angular contact ball bearing in an O arrangement,
b) is penetrated by the output shaft (15) of the gearbox (13) or a part which is non-rotatably coupled therewith and comprises a radially inner ring whose inner diameter exhibits a radial distance (C) to the outer diameter of the output shaft (15) of the gearbox (13).

2. The disk armature generator as recited in claim 1, **characterized in that** at least one raceway ring is common to all the rolling bearings (11) for a ring-shaped or disk-shaped rotor component (5) of the disk armature.

3. The disk armature generator as recited in claim 1 or 2, **characterized in that** the minimum inner diameter of the rolling bearing (11) associated with a ring-shaped or disk-shaped rotor component (5) of the disk armature is a radial distance (B) from the outer diameter of the output shaft of the gearbox, which amounts to 1 cm or more, e. g. 5 cm or more, preferably 15 cm or more, preferably 50 cm or more, in particular 100 cm or more.

4. The disk armature generator as recited in one of the preceding claims, **characterized in that** a region belonging to the output shaft of the gearbox (13) and extending through the rolling bearing (11) is coupled, beyond the extended-through rolling bearing (11), i.e., beyond the end side thereof that faces the tower (34), to at least one ring-shaped or disk-shaped rotor component (5) of the disk armature.

5. The disk armature generator as recited in claim 4, **characterized in that** the coupling between the output shaft of the gearbox (13) and to at least one ring-shaped or disk-shaped rotor component (5) of the disk armature is implemented, not as rigid, but by means of at least one device for elastic force transmission (8-10) that is arranged inside the generator rotatably about the rotation axis (17) thereof.

6. The disk armature generator as recited in claim 5, **characterized in that** the device for force transmission comprises at least two rotating elements, one of which is implemented as a coupling disk (8) and/or at least one of which as a shaft ring (10).

7. The disk armature generator as recited in claim 6, **characterized in that** the two rotating elements (8, 10) are non-rotatably coupled to each other by means of at least one connection element (9).

8. The disk armature generator as recited in claim 7, **characterized in that** at least one connection element (9) is implemented as an elongated coupling element oriented parallel and eccentrically to the rotation axis (17) of the generator, in particular as a screw or a bolt or a connector.

9. The disk armature generator as recited in claim 8, **characterized in that** at least one coupling element consists of an elastic material, for example an elastomer-like, vulcanized-rubber-like or synthetic-rubber-like material or is coated by such a material.

10. The disk armature generator as recited in one of claims 7 to 9, **characterized in that** several coupling elements are arranged distributed annularly about the rotation axis (17) of the generator.

11. The disk armature generator as recited in one of claims 4 to 10, **characterized in that** the output shaft of the gearbox (13) is mounted to the housing of the generator and/or of the gearbox by means of at least one rolling bearing (12), which is disposed on the gearbox side of the coupling between the gearbox output shaft, on one side, and at least one ring-shaped or disk-shaped rotor component (5) of the disk armature, on the other side.

12. The disk armature generator as recited in claim 11, **characterized in that** the output shaft of the gearbox (13) is surrounded externally by the inner ring of its rolling bearing (12), while the outer ring of said rolling bearing (12) is surrounded externally by the housing of the generator (14) and/or of the gearbox (13).

13. The disk armature generator as recited in one of claims 11 or 12, **characterized in that** at least one rolling bearing (12) for the output shaft of the gearbox (13) is implemented as an angular contact ball bearing, preferably as a double-row angular contact ball bearing, in particular as a double-row angular contact ball bearing in an O arrangement

14. A wind power installation with a gearbox and a disk armature generator for generating electrical energy as recited in one of the preceding claims.

## Revendications

1. Générateur à rotor à disque destiné à produire de l'énergie électrique à partir de l'énergie de rotation d'une centrale électrique entraînée en rotation, de préférence d'une centrale électrique basée sur la mécanique des fluides, en particulier d'une éolienne, comprenant au moins deux composants statoriques (6, 7) décalés axialement l'un contre l'autre le long d'un axe de rotation (17) sensiblement horizontal du rotor à disque ainsi qu'au moins un composant rotorique (5) en forme d'anneau ou de disque du rotor à disque monté entre lesdits composants statoriques et logé pivotant autour dudit axe de rotation (17), avec, côté entrée, un raccordement pour un engrenage, de préférence un engrenage multiplicateur, plus particulièrement un engrenage planétaire, l'arbre de sortie de cet engrenage, notamment sa roue solaire, qui est coaxial à l'axe de rotation (17) du rotor à disque, étant couplé à au moins un composant rotorique (5) en forme d'anneau ou de disque du rotor à disque, **caractérisé en ce qu'**un palier à roulement (11) est associé à un composant rotorique (5) en forme d'anneau ou de disque du rotor à disque, lequel palier
a) est réalisé en tant que ou avec un/des roulement(s) à billes à contact oblique, présentant par exemple un angle de contact compris entre 40° et 50° relativement à l'axe de rotation (17), de préférence en tant que roulement à billes à contact oblique à deux rangées, notamment en tant que roulement à billes à contact oblique à deux rangées à disposition en O,
b) est traversé par l'arbre de sortie (15) de l'engrenage (13) ou par une pièce couplée à celui-ci de manière solidaire en rotation et présente une bague qui est située radialement à l'intérieur et dont le diamètre intérieur présente une distance radiale (C) par rapport au diamètre extérieur de l'arbre de sortie (15) de l'engrenage (13).

2. Générateur à rotor à disque selon la revendication 1, **caractérisé en ce qu'**au moins une bague de chemin de roulement est commune à tous les paliers à roulement (11) pour un composant rotorique (5) en forme de d'anneau ou de disque du rotor à disque.

3. Générateur à rotor à disque selon la revendication 1 ou 2, **caractérisé en ce que** le diamètre intérieur minimum du palier à roulement (11) associé à un composant rotorique (5) en forme d'anneau ou de disque du rotor à disque présente une distance radiale (B) par rapport au diamètre extérieur de l'arbre de sortie de l'engrenage, qui est de 1 cm ou plus, par exemple de 5 cm ou plus, de préférence de 15 cm ou plus, plus préférentiellement de 50 cm ou plus, plus particulièrement de 100 cm ou plus.

4. Générateur à rotor à disque selon l'une des revendications précédentes, **caractérisé en ce qu'**une partie de l'arbre de sortie de l'engrenage (13) traversant le palier à roulement (11) est, au-delà du palier de roulement (11) traversé, c'est-à-dire au-delà de sa face frontale tournée vers le mât (34), couplée à au moins un composant rotorique (5) en forme d'anneau ou de disque du rotor à disque.

5. Générateur à rotor à disque selon la revendication 4, **caractérisé en ce que** l'accouplement entre l'arbre de sortie de l'engrenage (13) et au moins un composant rotorique (5) en forme d'anneau ou de disque du rotor à disque n'est pas réalisé de manière rigide mais effectué à l'aide d'au moins un dispositif conçu pour permettre la transmission élastique des efforts (8-10) et disposé à l'intérieur du générateur de manière à pouvoir pivoter autour de l'axe de rotation (17) de celui-ci.

6. Générateur à rotor à disque selon la revendication 5, **caractérisé en ce que** le dispositif de transmission d'effort présente au moins deux éléments en rotation, dont un est réalisé en tant que disque d'accouplement (8) et/ou au moins un en tant que bague d'arbre (10).

7. Générateur à rotor à disque selon la revendication 6, **caractérisé en ce que** les deux éléments en rotation (8, 10) sont couplés l'un à l'autre de manière solidaire en rotation au moyen d'au moins un élément de raccordement (9).

8. Générateur à rotor à disque selon la revendication 7, **caractérisé en ce que** le moins un élément de raccordement (9) est réalisé en tant qu'élément d'accouplement allongé et orienté parallèlement et de manière excentrique par rapport à l'axe de rotation (17) du générateur, plus particulièrement en tant que vis ou boulon ou connecteur.

9. Générateur à rotor à disque selon la revendication 8, **caractérisé en ce qu'**au moins un élément d'accouplement est fait d'une matière élastique, par exemple d'une matière de type élastomère, en caoutchouc ou d'une matière semblable à du caoutchouc, et/ou est enveloppé de cette matière.

10. Générateur à rotor à disque selon l'une des revendications 7 à 9, **caractérisé en ce que** plusieurs éléments d'accouplement sont disposés et répartis en couronne autour de l'axe de rotation (17) du générateur.

11. Générateur à rotor à disque selon l'une des revendications 4 à 10, **caractérisé en ce que** l'arbre de sortie (13) de l'engrenage est monté sur le boîtier du générateur et/ou de l'engrenage au moyen d'au moins un palier à roulement (12) lequel se trouve côté transmission de l'accouplement entre l'arbre de sortie de l'engrenage, d'une part, et au moins un composant rotorique (5) en forme d'anneau ou de disque du rotor à disque, d'autre part.

12. Générateur à rotor à disque selon la revendication 11, **caractérisé en ce que** l'arbre de sortie de l'engrenage (13) est entouré extérieurement par la bague intérieure de son palier à roulement (12) tandis que la bague extérieure de ce palier à roulement (12) est pour sa part entouré extérieurement par le boîtier du générateur (14) et/ou de l'engrenage (13).

13. Générateur à rotor à disque selon l'une des revendications 11 ou 12, **caractérisé en ce qu'**au moins un palier à roulement (12) est réalisé en tant que roulement à billes à contact oblique pour l'arbre de sortie de l'engrenage (13), de préférence en tant que roulement à billes à contact oblique à deux rangées, plus particulièrement en tant que roulement à billes à contact oblique à deux rangées à disposition en O.

14. Eolienne équipée d'un engrenage et d'un générateur à rotor à disque destiné à produire de l'énergie électrique selon l'une des revendications précédentes.
